# EUROPÄISCHE PATENTSCHRIFT

(11) **EP 3 010 951 B1**
(45) Veröffentlichungstag und Bekanntmachung des Hinweises auf die Patenterteilung: **05.07.2017**
(21) Anmeldenummer: 14726166.3
(22) Anmeldetag: 26.05.2014
(51) Int. Cl.: C08G 18/61, C08G 18/48, C08G 18/72, C08G 18/76, C08G 18/77, C08K 3/00, C08K 3/32, C08G 18/10, C08G 18/42, C08G 77/46

(54) **ISOCYANAT-SILOXANPOLYETHER-ZUSAMMENSETZUNG**
ISOCYANATE/SILOXANE POLYETHER COMPOSITION
COMPOSITION DE POLYÉTHER DE SILOXANE-ISOCYANATE

(30) Priorität: 18.06.2013 DE 102013211349
(43) Veröffentlichungstag der Anmeldung: 27.04.2016
(73) Patentinhaber: Evonik Degussa GmbH, 45128 Essen (DE)
(72) Erfinder: EILBRACHT, Christian, 44627 Herne (DE); SCHILLER, Carsten, 40885 Ratingen (DE); GLOS, Martin, 46325 Borken (DE)
(86) Internationale Anmeldenummer: PCT/EP2014/060785
(87) Internationale Veröffentlichungsnummer: WO 2014/202339

(56) Entgegenhaltungen:
- WO-A1-2013/026815

## Beschreibung

Die vorliegende Erfindung betrifft eine Zusammensetzung enthaltend ein Siloxan der Formel (I), das mindestens einen Polyetherrest aufweist, der über eine Urethan-Bindung mit einem organischen Rest, vorzugsweise einem organischen Rest, der eine oder mehrere Isocyanat-Gruppen oder Polyurethanbindungen aufweist, verknüpft ist, und ein oder mehrere Verbindungen, die zwei oder mehr Isocyanatgruppen aufweisen, welche dadurch gekennzeichnet ist, dass sie keine Polyole, die kein Silizium enthalten, oder deren Umsetzungsprodukte mit Isocyanaten aufweisen, sowie die Verwendung der Zusammensetzung zur Herstellung von Polyurethanen bzw. Polyrethanschäumen sowie entsprechend hergestellte Polyurethane und -schäume und deren Verwendung.

### Stand der Technik:

WO 2009/003165 beschreibt Mischungen von neuartigen Treibmitteln, die mit speziellen Zusatzstoffen versehen werden müssen, um eine schädigende Wirkung der Zerfallsprodukte der Treibmittel auf die verwendeten Siloxan-Surfactants zu unterdrücken.

US 2009/0099273 beschreibt die Verwendung von Si-freien Surfactants, um das Problem mit den Reaktionsprodukten, gebildet aus Amin und Fluor-haltigen Treibmitteln, zu vermeiden. Es steht damit aber nur eine eingeschränkte Anzahl an Surfactants zur Verfügung.

Beide Alternativen bedeuten eine große Einschränkung bei der PU-Schaumherstellung. Es besteht daher der Bedarf an Siloxanen, die oben beschriebenen Nachteile nicht aufweisen und geeignet sind, als Silicon-Surfactants bei der Herstellung von PU-Schaum unabhängig vom eingesetzten Treibmittel verwendet werden zu können.

DE 10 2008 054 774, WO 2009/130194 und WO 2011/113708 beschreiben die Herstellung von (brandgehemmten) Polyurethanschäumen unter Verwendung von -NH-C(O)-Gruppen und freien OH-Gruppen tragenden Siloxanen, die durch Umsetzung von OH-Gruppen haltigen Siloxanen, insbesondere Hydroxymethyl-Resten oder Hydroxymethylether-Resten aufweisenden Siloxanen mit Isocyanaten erhalten wurden.

US3957843 beschreibt die Herstellung von Polyethersiloxanen, wobei die Polyether auch keine OH-Gruppe am Ende tragen können, sondern unter anderem mit monofunktionellen Isocyanaten umgesetzt werden können.

In DE 2558523 werden verzweigte Polysiloxan-Polyalkylen Copolymere und deren Verwendung als PU-Schaumstabilisator beschrieben. Hierbei wird die Verzweigung durch Umsetzung von Organosiloxanen mit Polyisocyanaten generiert und anschließend alle Isocyanat-Funktionen mit mono-funktionalen Polyethem umgesetzt.

Aufgabe der vorliegenden Erfindung war die Bereitstellung eines Verfahrens zur Herstellung von Polyurethanschaum, bei dem die Schädigung der Schaumstabilisatoren (Siloxan-Surfactants) durch Treibmittel und deren Abbauprodukte vermieden werden kann.

Überraschenderweise wurde nun gefunden, dass Verbindungen der Formel (I) bzw. Zusammensetzungen enthaltend Verbindungen, die zwei oder mehr Isocynatfunktionen aufweisen, und Verbindungen der Formel (I), diese Aufgabe lösen.

Dies war insbesondere überraschend, da den Dokumenten US3957843 und DE 2558523 keinerlei Hinweis entnommen werden kann, dass die dort beschriebenen Siloxane widerstandsfähiger gegen den Zerfall, ausgelöst durch schädigende Verbindungen resultierend aus den Treibmitteln (oder anderen Komponenten) sind.

Gegenstand der vorliegenden Erfindung sind deshalb Zusammensetzungen enthaltend ein Siloxan der Formel (I) wie unten definiert mit der Maßgabe, dass mindestens ein Rest der Formel (II) vorhanden ist, und ein oder mehrere Verbindungen, die zwei oder mehr Isocyanatgruppen aufweisen, dadurch gekennzeichnet, dass die Zusammensetzung keine Polyole, die kein Silizium enthalten, oder deren Umsetzungsprodukte mit Isocyanaten aufweisen.

Ebenfalls Gegenstand der vorliegenden Erfindung sind ein Verfahren zur Herstellung von Polyurethanschäumen dadurch gekennzeichnet, dass die erfindungsgemäße Zusammensetzung verwendet wird, sowie die mit diesem Verfahren hergestellten Polyurethanschäume sowie deren Verwendung in und/oder als Kühlschrankisolierung, Dämmplatten, Sandwichelementen, Rohrisolationen, Sprühschaum, 1- und/oder 1.5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber oder zur Herstellung entsprechender Produkte.

Die erfindungsgemäße Zusammensetzung hat den Vorteil, dass das als Schaumstabilisator verwendete Siloxan der Formel (I) nahezu unbegrenzt lagerfähig ist. Eine Schädigung durch Treibmittel oder ggf. auch andere Komponenten, die zur Herstellung eines PU-Schaums Verwendung finden, oder deren Folgeprodukte kann nicht erfolgen, da der Schaumstabilisator erst bei der eigentlichen Herstellung des Schaums mit dem Treibmittel in Kontakt kommt.

Nahezu unbegrenzt lagerfähig bedeutet im Rahmen der vorliegenden Erfindung, dass eine erfindungsgemäße Zusammensetzung vorzugsweise mindestens 3 Monate lagerstabil ist, in dem Sinne, dass nach der Lagerzeit keine Veränderungen im Verschäumungsprozess im Vergleich zu frisch bereiteten Zusammensetzungen erkennbar sind. Hierbei ist darauf zu achten, dass die Lagerbedingungen entsprechend einem Isocyanat gewählt sind, also z.B. die Zusammensetzungen keinen hohen Temperaturen (größer 50 °C) oder Wasser in Form von Luftfeuchtigkeit (größer 50 mg/kg) Zusammensetzung pro Woche ausgesetzt wird. Entsprechende Anweisungen zur Handhabung und Lagerung von Isocyanaten können den Informationsmaterialien der Isocyanat-Hersteller wie z.B. dem "MDI-Handbook" der BASF entnommen werden.

Die erfindungsgemäßen Zusammensetzungen weisen neben der guten Lagerfähigkeit auch eine besonders einfache Form der Verarbeitung auf, da die Zusammensetzung direkt als Isocyanatkomponente in dem Herstellprozess zugegeben werden kann.

Das erfindungsgemäße Verfahren hat den Vorteil, dass in gegebenenfalls vorformulierten Mischungen aus Polyolen und/oder Katalysatoren, Wasser/Treibmitteln, und ggf. weiteren Additiven, die als gebrauchsfertige Polyurethanschaum-Systeme vermarktet werden, auch Chemikalien enthalten sein können, die ein Siloxan schädigen würden. Damit werden entsprechende Probleme mit Verschlechterung der Schaumeigenschaften durch lange Lagerzeiten solcher Systeme vermieden.

Das erfindungsgemäße Verfahren bzw. die erfindungsgemäße Zusammensetzung weist insbesondere den Vorteil auf, dass es/sie in Zweikomponenten-Verschäumungsverfahren eingesetzt werden können, in denen halogenierte Olefine oder/und Ameisensäure als Treibmittel eingesetzt werden, mit denen Polyurethanschäume erhalten werden können, die sich durch gute Isolationseigenschaften und Geschlossenzelligkeit auszeichnen.
In Einkomponentensystemen tritt das Problem des Siloxanabbaus üblicherweise nicht auf, da dort mildere Katalysatoren und/oder andere Treibmittel verwendet werden. So enthält z.B. ein Einkomponentensystem kein Wasser. Trotzdem kann auch hier der Einsatz der erfindungsgemäßen Zusammensetzung zur Herstellung des Einkomponentensystems vorteilhaft sein, um die Schaumeigenschaften zu verbessern (z.B. hinsichtlich Schaumausbeute, Feinzelligkeit und Offenzelligkeit)
Der erfindungsgemäße Polyurethanschaum hat den Vorteil, dass er konstant hohe Qualität, d.h. eine besonders feine Zellstruktur mit besonders wenig Schaumdefekten (Lunker, Risse, Verdichtungen) aufweist.

Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.
Unter Polyurethanschaum (PU-Schaum) wird im Rahmen der vorliegenden Erfindung Schaum verstanden, der als Reaktionsprodukt basierend auf Isocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden. Bevorzugte Polyurethanschäume sind Polyurethanhartschäume.

Die erfindungsgemäße Zusammensetzung enthaltend ein Siloxan der Formel (I) 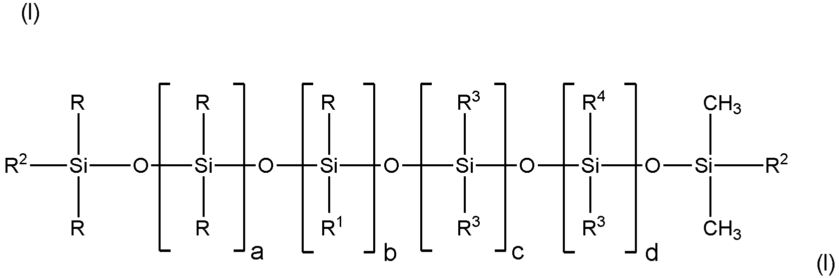 worin 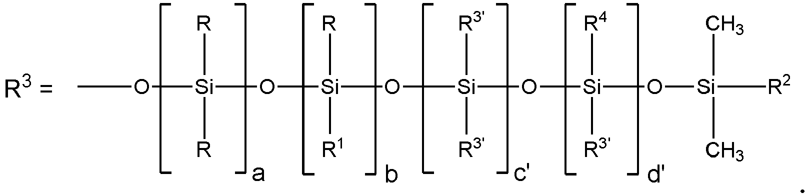
a unabhängig voneinander 0 bis 500 ist, vorzugsweise 1 bis 300 und insbesondere 2 bis 150,
b unabhängig voneinander 0 bis 60 ist, vorzugsweise 1 bis 50 und insbesondere 1 bis 30,
c unabhängig voneinander 0 bis 10, vorzugsweise 0 oder > 0 bis 5, ist,
d unabhängig voneinander 0 bis 10, vorzugsweise 0 oder > 0 bis 5, ist,
c' unabhängig voneinander 0 bis 10, vorzugsweise 0 oder > 0 bis 5, ist,
d' unabhängig voneinander 0 bis 10, vorzugsweise 0 oder > 0 bis 5, ist,
mit der Maßgabe, dass pro Molekül der Formel (I) die mittlere Anzahl ∑d + d' mit R^{3'} = R³ derT-Einheiten und die mittlere Anzahl ∑c + c' mit R^{3'} = R³ der Q-Einheiten pro Molekül jeweils nicht größer als 50, die mittlere Anzahl ∑a der D-Einheiten pro Molekül nicht größer als 2000 und die mittlere Anzahl ∑b der R¹ tragenden Siloxy-Einheiten pro Molekül nicht größer als 100 ist,
R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen ist, vorzugsweise ein Methylrest ist,
R² unabhängig voneinander R¹ oder R ist,
R^{3'} unabhängig voneinander R³ oder R ist,
R¹ ist ungleich R und unabhängig voneinander ein organischer Rest und/oder ein Rest ausgewählt aus der Gruppe umfassend

   -CH₂-CH₂-CH₂-O-(CH₂-CH₂O-)ₓ-(CH₂-CH(R')O-)_{y}-R"

   -CH₂-CH₂-O-(CH₂-CH₂O-)ₓ-(CH₂-CH(R')O-)_{y}-R"

   -CH₂-R^{IV}

   -CH₂-CH₂-(O)_{x'}-R^{IV}

   -CH₂-CH₂-CH₂-O-CH₂-CH(OR")-CH₂OR"

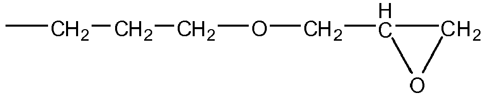

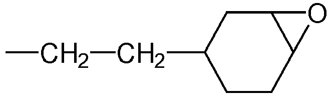

   oder

   -CH₂-CH₂-CH₂-O-CH₂-C(CH₂OR")₂-CH₂-CH₃

   ist, bevorzugt ist R¹

   -CH₂-CH₂-CH₂-O-(CH₂-CH₂O-)ₓ-(CH₂-CH(R')O-)_{y}-R"

   und/oder

   -CH₂-CH₂-O-(CH₂-CH₂O-)ₓ-(CH₂-CH(R')O-)_{y}-R"

   und/oder

   -CH₂-R^{IV},

   worin
   x 0 bis 100, vorzugsweise > 0, insbesondere 1 bis 50,
   x' 0 oder 1,
   y 0 bis 100, vorzugsweise > 0, insbesondere 1 bis 50,
   bevorzugt x 0 bis 100, vorzugsweise 1 bis 80, bevorzugt 2 bis 50 und y 0 bis 100, vorzugsweise 0 oder 1 bis 80, bevorzugt 0 oder 2 bis 50,
   vorzugsweise mit der Maßgabe, dass x + y größer-gleich 1, vorzugsweise größer-gleich 2, bevorzugt größer-gleich 3 und besonders bevorzugt größer-gleich 4 ist,
   R' unabhängig von einander eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist, wobei innerhalb eines Restes R¹ und/oder eines Moleküls der Formel I untereinander verschiedene Substituenten R' vorliegen können, vorzugsweise sind R' Methyl-, Ethyl- und/oder Phenyl-Reste, bevorzugt Methyl-Reste, und
   R" unabhängig voneinander eine Alkylgruppe mit 1 bis 4 C-Atomen, vorzugsweise eine Methylgruppe, eine Gruppe -C(O)-R'" mit R'" = Alkylrest, eine Gruppe -CH₂-O-R', eine Alkylarylgruppe, wie z.B. eine Benzylgruppe, die Gruppe -C(O)NH-R' oder ein Rest der Formel (II) 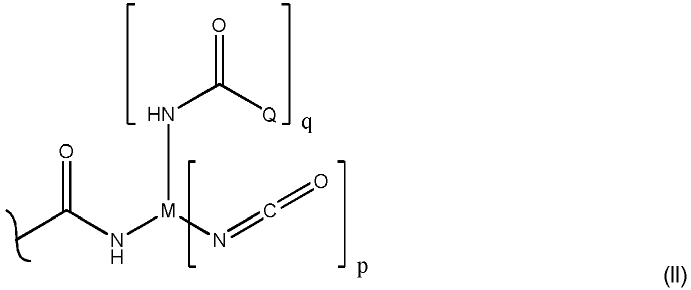 bedeutet,
      mit M = organischer Rest, vorzugsweise organischer Rest der ausschließlich Wasserstoff und Kohlenstoff und ggf. Halogenatome aufweist, mit mindestens 5, vorzugsweise von 5 bis 50, bevorzugt von 6 bis 35 Kohlenstoffatomen,
      p = 0 oder 1 bis 15, vorzugsweise 1 bis 5, bevorzugt 1, 2, 3, 4 oder 5,
      q = 0 oder 1 bis 15, vorzugsweise 0 oder 1 bis 5, bevorzugt 0,
      Summe p + q größer-gleich 1, vorzugsweise 1 bis 30, bevorzugt 1 bis 10 und besonders bevorzugt 1, 2, 3, 4 oder 5,
      Q = organischer Rest oder gleicher oder verschiedener Rest der Formel (I), der wiederum über den Rest R¹ angebunden ist, vorzugsweise organischer Rest, der kein Siliziumatom aufweist oder identischer Rest der Formel (I) (Q ist also zwei- oder mehrmals mit demselben Siloxan der Formel (I) verknüpft, und besonders bevorzugt organischer Rest, der kein Siliziumatom aufweist, mit der Maßgabe, dass in einer Verbindung der Formel (I), unabhängig von der Anzahl möglicher Reste der Formel (I) die Anzahl der Siliziumatome in der Verbindung vorzugsweise maximal 1500, bevorzugt 500 und besonders bevorzugt maximal 300 beträgt,
      R^{IV} ein linearer, cyclischer oder verzweigter, ggf. substituierter, z. B. mit Halogenen substituierter Kohlenwasserstoffrest mit 1 bis 50, vorzugsweise 9 bis 45, bevorzugt 13 bis 37 C-Atomen ist,
      R⁴ unabhängig voneinander R, R¹ und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann.
      mit der Maßgabe, dass mindestens ein Rest der Formel (II) in einer Verbindung der Formel (I) vorhanden ist,
      und ein oder mehrere Verbindungen, die zwei oder mehr Isocyanatgruppen aufweisen (VICG), zeichnet sich dadurch aus, dass die Zusammensetzung keine Polyole, die kein Siliziumatom enthalten, oder deren Umsetzungsprodukte mit Isocyanaten, und vorzugsweise keine Amine, die keine Siliziumatome aufweisen, aufweisen. Vorzugsweise sind mindestens 10 % (numerisch) der Reste R" solche der Formel (II) und bevorzugt ist kein Rest R" ein Wasserstoffrest.

Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Als Reste der Formel (II) können die Siloxane der Formel (I) z.B. die nachfolgend aufgeführten Reste aufweisen, wobei NCO für die Gruppe -N=C=O steht: 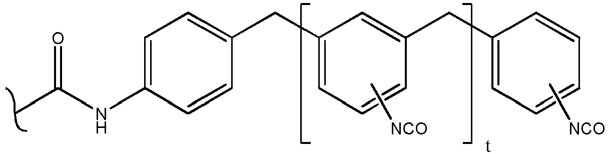 mit t= 0 bis 5

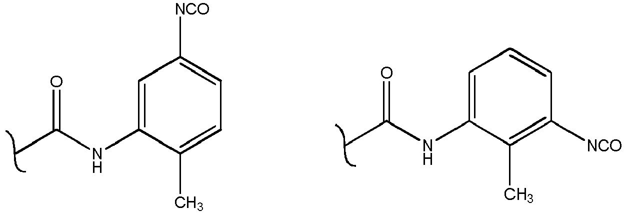

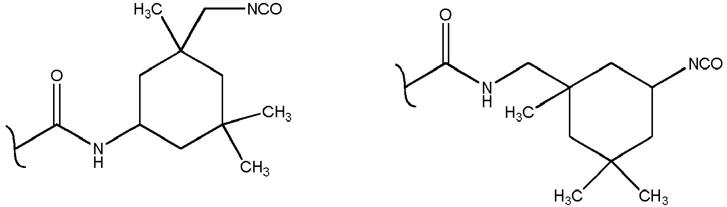

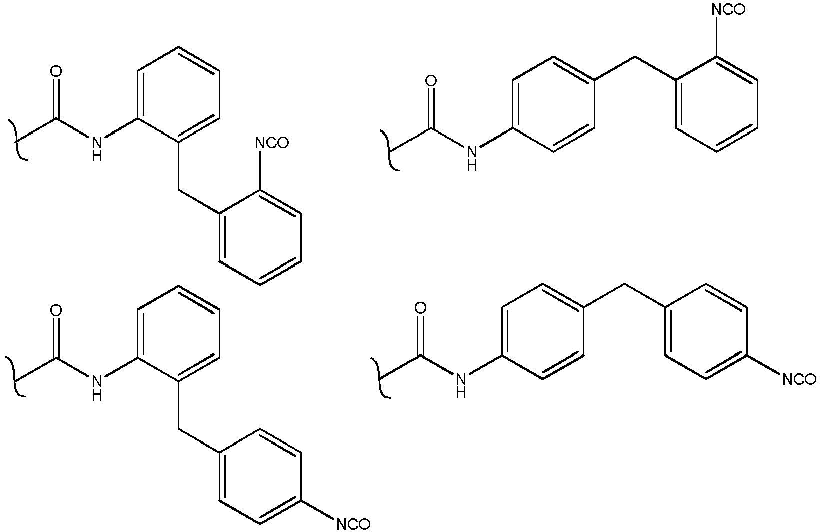

Es kann vorteilhaft sein, wenn in der erfindungsgemäßen Zusammensetzung als Siloxan der Formel (I) ein Siloxan vorhanden ist, bei dem in allen Resten der Formel (II) q = 0 ist. Vorzugsweise sind als Siloxan der Formel (I) ausschließlich solche vorhanden, bei denen in allen Resten der Formel (II) q = 0 ist.

Je nach Verwendungszweck kann es vorteilhaft sein, wenn in der erfindungsgemäßen Zusammensetzung als Siloxane der Formel (I) solche vorhanden sind, vorzugsweise ausschließlich als Siloxan der Formel (I) vorhanden sind, die keine oder im statistischen Mittel weniger als eine Verzweigung im Siloxan-Gerüst haben und für die damit gilt, dass ∑c + ∑d < 1 und ∑c' + ∑d' = 0 bzw. vorzugsweise c und d = 0 ist. Eine solche erfindungsgemäße Zusammensetzung ist insbesondere dann vorteilhaft, wenn ein eher geschlossenzelliger Polyurethan-Schaum erzeugt werden soll. Es kann aber auch vorteilhaft sein, wenn die erfindungsgemäße Zusammensetzung als Siloxan der Formel (I) ein Siloxan aufweist bzw. vorzugsweise ausschließlich solche Siloxane aufweist, bei denen im statistischen Mittel eine oder mehr als eine Verzweigung im Siloxan-Gerüst vorhanden ist und für die damit gilt, dass ∑c + ∑c' + ∑d + ∑d' ≥ 1. Eine solche erfindungsgemäße Zusammensetzung ist insbesondere dann vorteilhaft, wenn ein eher offenzelliger Polyurethan-Schaum erzeugt werden soll. Bevorzugt sind in der erfindungsgemäßen Zusammensetzung als Siloxane der Formel (I) solche vorhanden, bei denen a unabhängig voneinander 1 bis 300 ist, b unabhängig voneinander 1 bis 50 ist, c + c' unabhängig voneinander 0 bis 4 ist, d + d' unabhängig voneinander > 0 bis 4 ist, mit der Maßgabe, dass pro Molekül der Formel (I) die mittlere Anzahl ∑d + d' der T-Einheiten und die mittlere Anzahl ∑c + c' der Q-Einheiten pro Molekül jeweils nicht größer als 20, die mittlere Anzahl ∑a der D-Einheiten pro Molekül nicht größer als 1500 und die mittlere Anzahl ∑b der R¹ tragenden Siloxy-Einheiten pro Molekül nicht größer als 50 ist.

Das in der erfindungsgemäßen Zusammensetzung vorhandene Siloxan der Formel (I) ist besonders bevorzugt ein Siloxan, bei dem c und d = 0 ist. Bevorzugte erfindungsgemäße Zusammensetzungen weisen als Siloxane der Formel (I) ausschließlich solche auf, bei denen c und d = 0 ist.

Es kann vorteilhaft sein, wenn in der erfindungsgemäßen Zusammensetzung als Siloxan der Formel (I) ein Siloxan vorhanden ist, bei dem die Reste, die Reste der Formel (II) tragen, ausschließlich kammständig angeordnet sind. Vorzugsweise sind in der erfindungsgemäßen Zusammensetzung ausschließlich solche Siloxane der Formel (I) vorhanden, bei denen die Reste, die die Reste der Formel (II) tragen, kammständig angeordnet sind.

Je nach Verwendungszweck kann es aber auch vorteilhaft sein, wenn die Zusammensetzung erfindungsgemäße Siloxane der Formel (I) aufweist, in denen die endständigen, oder auch alpha- und omega- genannten, Positionen (die Reste R²) am Siloxan mindestens teilweise Reste R¹ sind, also R² = R¹ ist. Es sind hierbei zumindest 10 mol-%, bevorzugt zumindest 30 mol-%, besonders bevorzugt zumindest 50 mol-% der endständigen Positionen mit Resten R¹ funktionalisiert. Besonders bevorzugt sind die Reste R¹ zu mindestens 25 % (numerisch, bezogen auf die Anzahl der Reste R¹) solche, die einen Rest der Formel (II) aufweisen.

Vorzugsweise sind in der erfindungsgemäßen Zusammensetzung als Siloxan der Formel (I) Siloxane vorhanden, bei denen der Quotient a/b mindestens 7, vorzugsweise größer 10, besonders bevorzugt größer 12 ist. Bevorzugt weist die erfindungsgemäße Zusammensetzung als Siloxan der Formel (I) ausschließlich solche auf, bei denen der Quotient a/b mindestens 7, vorzugsweise größer 10, besonders bevorzugt größer 12 ist. Vorzugsweise ist bei diesen Siloxanen der Formel (I) der Rest R jeweils ein Methylrest.

Die erfindungsgemäßen Zusammensetzungen weisen als Siloxane der Formel (I) vorzugsweise solche auf, bei denen im Rest R¹ vorhandene Oxyalkylen-Einheiten ausschließlich Oxyethylen-Einheiten sind. Bevorzugt weist die erfindungsgemäße Zusammensetzung als Siloxan der Formel (I) ausschließlich solche auf, bei denen die im Rest R¹ vorhandene Oxyalkylen-Einheiten ausschließlich Oxyethylen-Einheiten sind.

In der erfindungsgemäßen Zusammensetzungen sind als Siloxane der Formel (I) vorzugsweise solche vorhanden, bei denen R¹ unabhängig voneinander ein organischer Rest ausgewählt aus der Gruppe umfassend -CH₂-CH₂-CH₂-O-(CH₂-CH₂O-)ₓ-(CH₂-CH(R')O-)_{y}-R" und/oder -CH₂-CH₂-O-(CH₂-CH₂O-)ₓ-(CH₂-CH(R')O-)_{y}-R" und /oder -CH₂-R^{IV} ist, worin x 0 bis 100, vorzugsweise > 0, insbesondere 1 bis 50, y 0 bis 100, vorzugsweise > 0, insbesondere 1 bis 50, R' Methyl ist und R" unabhängig voneinander eine Gruppe der Formel (II) oder eine Alkylgruppe mit 1 bis 4 C-Atomen, eine Gruppe -C(O)-R'" mit R"' = Alkylrest, eine Gruppe -CH₂-O-R', eine Alkylarylgruppe, wie z. B. eine Benzylgruppe, die Gruppe -C(O)NH-R' bedeutet mit der Maßgabe dass mindestens 10% (numerisch) der Gruppen R" für Formel (II) stehen, wobei vorzugsweise der molare Anteil an Oxyethylen-Einheiten mind. 70% der Oxalkylen-Einheiten ausmacht, also x/(x+y) >0,7 ist. Außerdem kann es vorteilhaft sein wenn die PolyoxyalkylenKette am Ende eine Gruppe der Formel (II) trägt und gleichzeitig der molare Anteil an Oxyethylen-Einheiten maximal 70% der Oxalkylen-Einheiten ausmacht, also x/(x+y) <0,7 ist und R" eine Gruppe der Formel (II) bedeutet.

Es kann vorteilhaft sein, wenn die der erfindungsgemäßen Zusammensetzung als Siloxane der Formel (I) solche aufweisen, bei denen die Reste R¹ mindestens zu 10 mol%, bevorzugt zu mindestens 20 mol%, besonders bevorzugt zu mindestens 40 mol% der Formel -CH₂-R^{IV} genügen, wobei R^{IV} ein linearer oder verzweigter Kohlenwasserstoff mit 9 bis 17 Kohlenstoffatomen ist.

Bei den in der erfindungsgemäßen Zusammensetzung enthaltenen Siloxanen der Formel (I) beträgt der Anteil der Summe der Reste R¹ minimal 40 Gew.-%, bevorzugt minimal 45 Gew.-%, besonders bevorzugt minimal 50 Gew.-% bezogen auf das gesamte Molgewicht des Siloxans.

Bevorzugt in der erfindungsgemäßen Zusammensetzung enthaltene Siloxane der Formel (I) sind solche, bei denen keiner der Reste R" ein Wasserstoff ist.

Besonders bevorzugt in der erfindungsgemäßen Zusammensetzung enthaltene Siloxane der Formel (I) sind solche, bei denen keiner der Reste R" ein Wasserstoff ist und bei denen die in Rest R¹ enthaltenen Oxalkylen-Einheiten ausschließlich Oxyethylen-Einheiten sind.

Der Anteil an Resten R¹, die mindestens einen Rest der Formel (II) aufweisen, beträgt bezogen auf die Summe der Reste R¹ vorzugsweise mindestens 20 %, bevorzugt mindestens 40 % und besonders bevorzugt mindestens 60% (Nummerische Prozentangaben).

Die erfindungsgemäßen Zusammensetzungen können bedingt durch den Herstellprozess vorliegen oder auch nachträglich hergestellt werden, um beispielsweise die Dosierbarkeit der Siloxane der Formel (I) zu erleichtern oder auch die Einarbeitbarkeit der Siloxane der Formel (I) in die zu verschäumende Reaktionsmischung zu verbessern.

Die Verbindungen (VICG), die zwei oder mehr Isocyanatgruppen aufweisen, sind vorzugsweise ausgewählt aus den Isocyanaten oder Polyisocyanaten oder Mischungen davon. Bevorzugte VICG sind aromatische mehrfunktionelle Isocyanate, wie sie auch in den Verschäumungen verwendet werden. Besonders bevorzugte Isocyanate VICG sind insbesondere ausgewählt aus 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Besonders bevorzugt sind die Verbindungen (VICG), die zur Verschäumung als Isocyanatkomponente eingesetzten Isocyanate sowie die zur Herstellung der Verbindungen der Formel (I) eingesetzten Isocyanate identisch bzw. bei Mischungen identisch zusammengesetzt.

In der erfindungsgemäßen Zusammensetzung beträgt das Massenverhältnis von Siloxanen der Formel (I) zu VICG vorzugsweise von 1 zu 500 bis 1 zu 10, bevorzugt von 1 zu 300 bis 1 zu 20.

Neben den genannten Verbindungen können die erfindungsgemäßen Zusammensetzungen weitere Substanzen aufweisen. Diese sollten eine ausreichend geringe bzw. keine Reaktivität gegenüber den Isocyanat-Funktionen der Siloxane aufweisen. Geeignete Substanzen können z. B. aliphatische oder aromatische Kohlenwasserstoffe wie Solvesso^{®}-Typen, Xylol, Solvesso^{®} A, Solvesso^{®} 100, Solvesso^{®} 150, Hyblene^{®}, Trigylceride, Ester wie Butylacetat, Isopropylmyristat, Ethylhexylstearat, Decyloleat, Isocetylpalmitat, PEG-400-Dicocoat, Amide wie N-Alkylpyrrolidone oder N,N-Dimethyldecanamid, Glymes, also Glykol-diether, wie beispielsweise Monoethylenglykoldimethylether (Monoglyme), Allylpolyglykolmethylether, Polyglykoldiallylether, Diethylenglykoldimethylether (Diglyme), Triethylenglykoldimethylether (Triglyme), Tetraethylenglykoldimethylether (Tetraglyme), Polyethylenglykoldimethylether, Diethylenglykoldibutylether, Polyethylenglykoldibuthylether, Dipropylenglykoldimethylether, sein.
In der erfindungsgemäßen Zusammensetzung beträgt das Massenverhältnis von diesen weiteren Substanzen zu Siloxanen der Formel (I) vorzugsweise von 100 zu 1 bis 1 zu 100, bevorzugt von 10 zu 1 bis 1 zu 10.
Die Herstellung der Siloxane nach Formel (I) kann nach den bekannten Methoden erfolgen, wie z. B. die edelmetallkatalysierte Hydrosilylierungsreaktion von Verbindungen, die eine Doppelbindung und ggf. eine OH-Gruppe enthalten, mit entsprechenden Wasserstoffsiloxanen wie beispielsweise in EP 1 520 870, beschrieben und anschließender Umsetzung der so hergestellten, mit einer OH-Gruppe aufweisenden Reste modifizierten Siloxane mit geeigneten Isocyanaten. Die Schrift EP 1 520 870 wird hiermit als Referenz eingeführt. Sollen die Siloxane der Formel (I) einen Anteil der Reste R¹ aufweisen, die Kohlenwasserstoffreste sind, können diese z. B. dadurch erhalten werden, dass bei der Hydrosilylierung ein entsprechender Anteil an Olefinen eingesetzt wird.
Als Verbindungen, die zumindest eine Doppelbindung pro Molekül aufweisen, können z. B. α-Olefine, Vinylpolyoxyalkylene und/oder Allylpolyoxyalkylene eingesetzt werden. Vorzugsweise werden Vinylpolyoxyalkylene und/oder Allylpolyoxyalkylene eingesetzt. Besonders bevorzugte Vinylpolyoxyalkylene sind z. B. Vinylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugt werden als Verbindungen, die zumindest eine Doppelbindung pro Molekül aufweisen, die in den Beispielen genannten α-Olefine, Allylalkohol, 1-Hexenol, Vinylpolyoxyalkylene und/oder Allylpolyoxyalkylene sowie Allylglycidylether und Vinylcyclohexenoxid eingesetzt. Hierbei ist zu beachten, dass für die Isocyanat-Derivatisierung mindestens eine, eine OH-Gruppe und eine Doppelbindung aufweisende Verbindung eingesetzt werden muss, die dann mit einem mehrfunktionellem Isocyanat (MFI) umgesetzt werden kann, um das Strukturelement der Formeln (II) erhalten zu können.

Vorzugsweise tragen mindestens 10 % (numerisch), bevorzugt mindestens 20 %, besonders bevorzugt mindestens 40 % und ganz besonders bevorzugt mindestens 60 % der Polyether-Seitenketten eine OH-Funktion, die anschließend mit einem Isocyanat umgesetzt wird. In einer bevorzugten Ausführungsform der Erfindung tragen 10 % bis 90 % besonders bevorzugt 20 %-80 % insbesondere bevorzugt 30 % bis 70 % der Polyether-Seitenketten eine OH-Funktion, die anschließend mit einem Isocyanat umgesetzt wird und die verbleibenden Polyether Seitenketten tragen Alkyl- oder Acetyl-Endgruppen, insbesondere Methylgruppen.

Die Herstellung der Strukturelemente der Formel (II) (Derivatisierung) erfolgt vorzugsweise durch Umsetzung der OH-Funktionen tragenden Reste, insbesondere Polyetherreste des Siloxans mit den mehrfach funktionellen Isocyanaten nach den bekannten Methoden zur Herstellung von Urethanen aus Isocyanaten und Alkoholen. Bevorzugt wird hierbei soviel MFI eingesetzt, dass ein molarer Überschuss an Isocyanat-Gruppen bezogen auf die OH-Gruppen vorliegt. Dies ist insbesondere dann bevorzugt, wenn di-funktionelle Isocyanate wie beispielsweise TDI zur Derivatisierung verwendet werden.

Bevorzugt wird bei der Derivatisierung das OH-Funktionen tragende Siloxan in das Isocyanat eindosiert.

Durch den Überschuss und das Dosierungsverfahren wird erreicht, dass immer noch eine NCO-Funktion des zugrunde liegenden Isocyanats erhalten bleibt und die Siloxane wie in Formel 1 dargestellt eine NCO-Funktionalität tragen.

Bevorzugt wird die Derivatisierung bei milden Bedingungen (Temperaturen kleiner 80°C, bevorzugt kleiner 60°C und Normaldruck) unter Feuchtigkeitsausschluss durchgeführt. Es können für die Polyurethanreaktion geeignete Katalysatoren eingesetzt werden, wobei darauf zu achten ist, dass Katalysatoren vermieden werden, die zu Nebenreaktionen wie z.B. Trimerisierung der Isocyanate führen und dadurch die Lagerstabilität der Mischung verschlechtern. Bevorzugt wird deshalb ohne Zusatz von Katalysatoren derivatisiert.

Als MFI können z.B. alphatische oder aromatische Isocyanate eingesetzt werden. Geeignete Isocyanate im Sinne dieser Erfindung sind alle mehrfunktionalen organischen Isocyanate, wie beispielsweise 4,4'-Diphenylmethandiisocyanat (MDI), Toluoldiisocyanat (TDI), Naphthalenediisocyanat (NDI), Tris(4-isocyanatophenyl)methan, m-Tetramethylxylylenediisocyanat (TMXDI), 1,1-Methylenebis(4-isocyanatocyclohexan)(H12-MDI), Hexamethylendiisocyanat (HMDI) und darauf basierende höherfunktionelle Isocyanate wie Biuret-Triisocyanate oder Isocyanurat-enthaltende Oligomere sowie isophorondiisocyanat (IPDI) und entsprechende darauf basierende höher-funktionelle Isocyanate. Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Des weiteren kann M auch Carbodiimid-, Uretonimin-, Uretdion-, Isocyanurat-, Allophanat-, Biuret-, Carbamat- oder andere Funktionalitäten enthalten, die aus Isocyanaten herstellbar sind.

In einer bevorzugten Ausführungsform der Erfindung wird als MFI zur Derivatisierung des Siloxans ein polymeres MDI eingesetzt. Hierbei handelt es sich vorzugsweise um ein Gemisch aus zwei-, drei- und höher-kemigen MDI-Komponenten. Solche Gemische können auch bei der Verschäumung verwendet werden. Kommerziell erhältliche Materialien sind zum Beispiel: Desmodur^{®} 44v20, Desmodur^{®} 44V70 von Bayer Material Science, Suprasec^{®} 5025 von Huntsman oder Lupranat^{®} M20, Lupranat^{®} M70L von der BASF.

Durch Verwendung dieser MFI Verbindungen können z. B. Reste der Formel (II) erhalten werden, die der nachfolgenden Formel genügen. 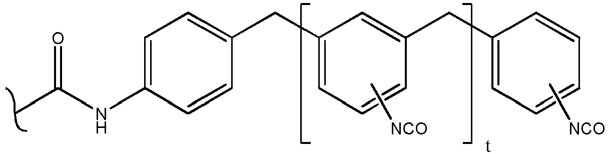 mit t= 0 bis 5

Durch die Verwendung von Toluyldiisocyanat (TDI) zur Derivatisierung können Reste der Formel (II) mit den folgenden Strukturformeln erhalten werden:

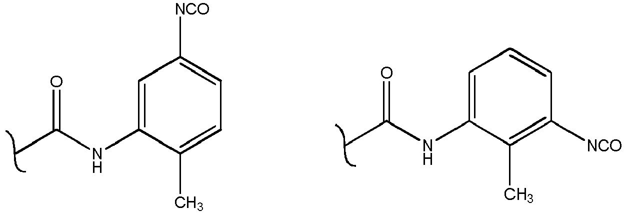

Durch die Verwendung von Isophorondiisocyanat zur Derivatisierung können Reste der Formel (II) mit den folgenden Strukturformeln erhalten werden:

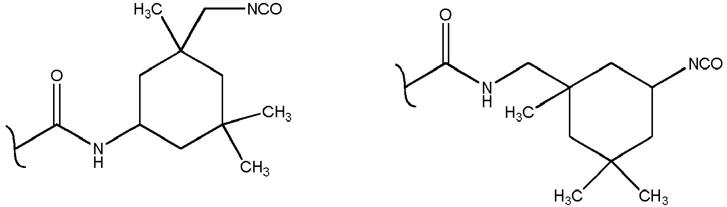

Durch die Verwendung von monomerem Methylendiphenyldiisocyanat (MDI) zur Derivatisierung können, je nach Art der MDI-Isomeren mit Funktionalisierung in 4,4'-, 2,4'- oder 2,2'- Position, die Reste der Formel (II) mit den folgenden Strukturformeln erhalten werden:

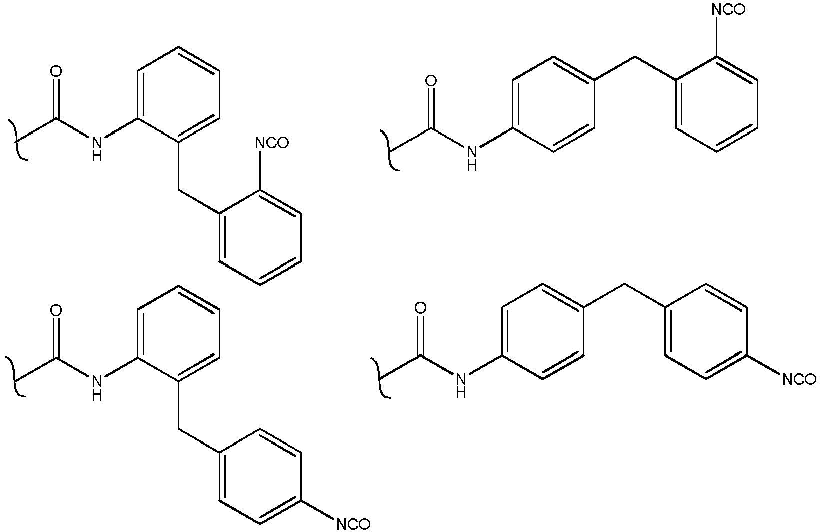

Die erfindungsgemäßen Zusammensetzungen können z. B. zur Herstellung von Polyurethanschäumen verwendet werden. Vorzugsweise werden die erfindungsgemäßen Zusammensetzungen in dem erfindungsgemäßen Verfahren, insbesondere zur Herstellung erfindungsgemäßer Polyurethanschäume verwendet.

Das erfindungsgemäße Verfahren zur Herstellung von Polyurethanschaum zeichnet sich dadurch aus, dass eine erfindungsgemäße Zusammensetzung eingesetzt wird.

Bevorzugt wird soviel der Zusammensetzung eingesetzt, dass der Massenanteil an Verbindungen der Formel (I) am fertigen Polyurethanschaum von 0,01 bis 10 Gew.-%, bevorzugt von 0,1 bis 3 Gew.% beträgt.

Die erfindungsgemäßen Zusammensetzungen können z. B. als Schaumstabilisatoren in den üblichen Formulierungen zur Herstellung von Polyurethanschaumstoffen verwendet werden. Übliche Formulierungen weisen vorzugsweise ein oder mehrere organische Isocyanate mit zwei oder mehr Isocyanat-Funktionen, ein oder mehrere Polyole mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Wasser, optional physikalische Treibmittel, optional Flammschutzmittel und ggf. weitere Additive auf.

Bevorzugte Additive/Hilfsmittel sind vorzugsweise ausgewählt aus organischen (Si-freien) Schaumstabilisatoren, Tensiden, Nukleierungsmitteln, zellverfeinernden Additiven, Zellöffnern, Vemetzem, Emulgatoren, Flammschutzmitteln, Antioxidantien, Antistatika, Bioziden, Farbpasten, festen Füllstoffen, Aminkatalysatoren, Metallkatalysatoren, Polyolen, und/oder Puffersubstanzen.

Geeignete Isocyanate zur Verwendung in der Formulierung sind alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Bevorzugt werden als Isocyanate zur Verwendung in der Formulierung solche Isocyanate oder Isocyanatmischungen eingesetzt, wie sie als VICG und/oder MFI, vorzugsweise als VICG und MFI Verbindungen zur Herstellung der erfindungsgemäßen Zusammensetzung eingesetzt wurden. In der Formulierung beträgt das Verhältnis von Siloxanen der Formel (I) zu Isocyanaten vorzugsweise von 1 zu 5000 bis 1 zu 10, bevorzugt von 1 zu 1000 bis 1 zu 15, besonders bevorzugt 1 zu 500 bis 1 zu 20.

Geeignete Polyole zur Verwendung in der Formulierung sind alle organischen Substanzen mit mehreren gegenüber Isocyanaten reaktiven Gruppen, sowie deren Zubereitungen. Bevorzugte Polyole sind alle zur Herstellung von Polyurethan-Schaumstoffen üblicherweise verwendeten Polyetherpolyole und Polyesterpolyole. Polyetherpolyole können durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen).

Ein geeignetes Verhältnis von Isocyanat und Polyol in der Formulierung, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt vorzugsweise im Bereich von 10 bis 1000, bevorzugt 80 bis 350.

Geeignete Katalysatoren zur Verwendung in der Formulierung sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, sowie Metall-haltige Verbindungen wie beispielsweise Zinnverbindungen wie Dibutylzinndilaurat oder Zinn-II-2-ethylhexanoat und Kaliumsalze wie Kaliumacetat und Kalium-2-ethylhexanoat.

Geeignete Einsatzmengen richten sich nach dem Typ des Katalysators und liegen üblicherweise im Bereich von 0,05 bis 5 pphp (= Gewichtsteilen bezogen auf 100 Gewichtsteile Polyol) bzw. 0,1 bis 10 pphp für Kaliumsalze.

Geeignete Wasser-Gehalte in der Formulierung hängen davon ab, ob zusätzlich zum physikalischen Treibmittel noch Wasser eingesetzt wird oder nicht. Üblicherweise werden Wassermengen von 0,1 bis 5 pphp eingesetzt. Bei Schäumen, die nur mit Wasser getrieben werden, können Mengen von bis zu 35 pphp Wasser eingesetzt werden.

Es können in dem erfindungsgemäßen Verfahren auch verschiedene geeignete physikalische Treibmittel eingesetzt werden. Dies sind beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Fluor-haltige Olefine, wie beispielsweise Hexafluorbuten, Chlortrifluorpropen, Tetraflurpropen, FEA 1100 (Dupont), HBA-1 oder HBA-2 (Honeywell), AFA-L1 (Arkema), Sauerstoff-haltige Verbindungen wie Methylformiat und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Vorzugsweise werden in dem erfindungsgemäßen Verfahren als Treibmittel Ameisensäure, Ameisensäure-Derivate und/oder Halogenhaltige Treibmittel eingesetzt.

Geeignete Flammschutzmittel zur Verwendung in der im erfindungsgemäßen Verfahren eingesetzten Formulierung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), Feststoffe wie Ammoniumpolyphosphat (APP) und roter Phosphor, halogenierte Verbindungen, beispielsweise halogenierte Polyole, oder Feststoffe wie Blähgraphit und Melamin geeignet.

Die Verarbeitung der erfindungsgemäßen Formulierungen zu Schaumstoffen in dem erfindungsgemäßen Verfahren kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Ein Spezialfall stellen die 1- und 1,5-Komponenten-Dosenschäume dar, bei denen ein Polyurethan-Präpolymer eingesetzt wird. Auch in dieser Anwendung können die erfindungsgemäßen Zusammensetzungen als Schaumstabilisator eingesetzt werden.

Durch das erfindungsgemäße Verfahren wird der erfindungsgemäße Polyurethanschaum erhalten. Der erfindungsgemäße Polyurethanschaum kann ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum sein. Die Bezeichnung Polyurethan ist hierbei als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyhamstoffe sind ausdrücklich mit eingeschlossen. Vorzugsweise ist der erfindungsgemäße Polyurethanschaum geschlossenzellig.

Die erfindungsgemäßen Polyurethanschäume zeichnen sich dadurch aus, dass sie eine erfindungsgemäße Zusammensetzung aufweisen bzw. diese bei ihrer Herstellung eingesetzt wurde. Vorzugsweise beträgt der Massenanteil an Siloxanen der Formel (I) a von 0,01 bis 10 Gew.-%, bevorzugt von 0,1 bis 3 Gew.-% bezogen auf den fertigen Polyurethanschaum.

Die erfindungsgemäßen Polyurethanschäume können als Bestandteile von oder in und/oder als Kühlschrankisolierung, Dämmplatten, Sandwichelementen, Rohrisolationen, Sprühschaum, 1- und/oder 1.5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber oder zur Herstellung entsprechender Produkte verwendet werden.

Vorzugsweise werden die erfindungsgemäßen Polyurethanschäume als Isolationsmaterial verwendet in Kühlschrankisolierung, Dämmplatten, Sandwichelementen, Rohrisolationen oder Sprühschaum.

Bevorzugte erfindungsgemäße Polyurethanschäume bzw. erfindungsgemäß hergestellte Polyurethanschäume zeichnen dadurch aus, dass sie einen Lambda-Wert von kleiner 24, bevorzugt von kleiner 23 und besonders bevorzugt kleiner-gleich 22 mW/m·K aufweisen.

### Beispiele:

### Beispiel 1: Herstellung erfindungsgemäßer Siloxane

Erfindungsgemäße Siloxane der Formel (I) können nach den im Stand der Technik bekannten Verfahren durch Umsetzung mit entsprechenden Wasserstoffsiloxane durch Hydrosilylierung hergestellt werden. Es wurden Allylpolyether und Olefine zu Verbindungen gemäß Formel (I) umgesetzt. Die Herstellung erfolgte verfahrensanalog zu Beispiel 7 aus DE 1020070554852 und damit übereinstimmend mit dem Stand der Technik zur Herstellung von SiC-verknüpften Polyethersiloxanen, wie er beispielsweise auch in der EP 1520870 beschrieben ist. In Tabelle 1 sind die verwendeten Polyether zusammengefasst.

**Tabelle 1: Zur Herstellung der Verbindungen in Tabelle 2 verwendete Allylpolyether (x = Ethylenoxid-Einheiten, y= Propylenoxid-Einheiten, R" = Endgruppe)**

| Polyether | Starter | R" | X = | y = |
|---|---|---|---|---|
| PE 1 | Allylalkohol | -H | 11 | 0 |
| PE2 | Allylalkohol | -H | 9 | 3 |
| PE 3 | Allylalkohol | -H | 13 | 4 |
| PE4 | Allylalkohol | -CH₃ | 12 | 9 |
| PE 5 | Allylalkohol | -H | 15 | 7 |
| PE 6 | Allylalkohol | -H | 13 | 14 |
| PE 7 | Allylalkohol | -CH₃ | 10 | 0 |
| PE 8 | Allylalkohol | -H | 36 | 38 |
| PE 9 | Allylalkohol | -H | 20 | 4,5 |

Die Struktur der erhaltenen Verbindung der Formel (I) kann Tabelle 2 entnommen werden. Die in Tabelle 2 aufgeführten Parameter beziehen sich auf die oben genannte Formel (I).

**Tabelle 2: Siloxan-Intermediate, I 1 bis I 19, zur Herstellung der Verbindungen der Formel (I)**

| Inter med. | R | ∑a | R¹ | R⁴ | ∑b | ∑c | ∑d | R² |
|---|---|---|---|---|---|---|---|---|
| 1 | CH₃ | 50 | PE 1)¹ | CH₃ | 8 | 0 | << 1 | R¹ |
| 2 | CH₃ | 20 | PE 1 | CH₃ | 2 | 0 | << 1 | R |
| 3 | CH₃ | 40 | PE 7 | CH₃ | 5 | 0 | << 1 | R |
| 4 | CH₃ | 65 | PE 6/PE 8)² | CH₃ | 5 | 0 | << 1 | R¹ |
| 5 | CH₃ | 40 | PE 4/PE 1)³ | CH₃ | 3 | 0,5 | 2 | R¹ |
| 6 | CH₃ | 40 | PE 3 | CH₃ | 3 | 0 | 1 | R |
| 7 | CH₃ | 40 | PE 3 | C₈H₁₇ | 3 | 0,5 | 2 | R¹ |
| 8 | CH₃ | 65 | PE 4/PE 5)³ | CH₃ | 4 | 0 | << 1 | R |
| 9 | CH₃ | 9 | PE 1 | CH₃ | 4 | 0 | 0 | R |
| 10 | CH₃ | 36 | PE 3 | CH₃ | 10 | 0 | 0 | R¹ |
| 11 | CH₃ | 50 | PE 3 | CH₃ | 8 | 0 | << 1 | R |
| 12 | CH₃ | 69 | PE 5 | CH₃ | 5 | | | R |
| 13 | CH₃ | 21,5 | PE 5 | CH₃ | 1,5 | | | R |
| 14 | CH₃ | 33 | PE 2/PE 7)³ | CH₃ | 5 | | | R¹ |
| 15 | CH₃ | 33 | PE 4/PE 5)³ | CH₃ | 5 | | | R¹ |
| 16 | CH₃ | 50 | PE 5 | CH₃ | 8 | 0 | << 1 | R |
| 17 | CH₃ | 36 | PE 5 | CH₃ | 5 | | | R¹ |
| 18 | CH₃ | 63 | PE 5 | CH₃ | 13 | | | R¹ |
| 19 | CH₃ | 55 | PE 9 | CH₃ | 10 | 0 | << 1 | R¹ |

| | | | | | | | | |
|---|---|---|---|---|---|---|---|---|
| ¹ Gemisch bestehend aus 80 Äq.-% PE 1 + 20 Äq.-% C16-Olefin ² Gemisch bestehend aus 60 Äq.-% PE 6 + 40 Äq.-% PE 8 ³ Gemisch bestehend aus je 50 Äq.-% der beiden PE | | | | | | | | |

Zur Herstellung der erfindungsgemäßen Siloxane wurden die Strukturen (Intermediate) aus Tabelle 2 mit verschiedenen Isocyanaten umgesetzt. Die Reaktion erfolgte nach dem folgenden Verfahren: Es wurden in einem Glaskolben unter Stickstoffatmosphäre bei 45°C je 30 g des Siloxan-Intermediats mit 270 g Isocyanat versetzt und für 2 Stunden gerührt. Die entsprechenden Ergebnisse sind in Tabelle 3 zusammengefasst.

**Tabelle 3: Herstellung der Siloxane entsprechend Formel I durch Umsetzung der Intermediate, beschrieben in Tabelle 2, mit verschiedenen Isocyanaten.**

| Siloxan | Intermediat Nr. | Isocyanat Nr. |
|---|---|---|
| 1 | 1 | 1 |
| 2 | 2 | 1 |
| 3 | 3 | 1 |
| 4 | 4 | 1 |
| 5 | 5 | 1 |
| 6 | 6 | 1 |
| 7 | 7 | 1 |
| 8 | 8 | 1 |
| 9 | 9 | 1 |
| 10 | 9 | 2 |
| 11 | 9 | 4 |
| 12 | 10 | 1 |
| 13 | 11 | 1 |
| 14 | 11 | 3 |
| 15 | 12 | 1 |
| 16 | 13 | 1 |
| 17 | 14 | 1 |
| 18 | 15 | 1 |
| 19 | 16 | 1 |
| 20 | 17 | 1 |
| 21 | 18 | 1 |
| 22 | 18 | 2 |
| 23 | 18 | 3 |
| 24 | 18 | 4 |
| 25 | 19 | 1 |

### Folgende Isocyanate wurden verwendet:

Nr. 1: Suprasec^{®} 5025 von Huntsman, ein polymeres MDI mit einem NCO Gehalt von 31 % Nr. 2: Desmodur^{®} 44V70L von Bayer Material Science, eine Mischung von Diphenylmethan-4,4'-diisocyanat, mit Isomeren und Homologen mit höherer Funktionalität mit einem NCO Gehalt von 30,5 bis 32 %.
Nr. 3: NCO-haltiges Umsetzungsprodukt von Suprasec^{®} 5085 mit Butyl-gestartetetem Polyether Typ "Polyglykol B11/50" von Clariant mit einem NCO-Gehalt von 4,6%.
Nr. 4: Desmodur^{®} VP 129 von Bayer Material Science, monomeres MDI mit erhöhtem 2,4-Isomer-Anteil.

### Beispiel 2: Verschäumungsbeispiele

Für die anwendungstechnische Ausprüfung der erfindungsgemäßen Formulierungen wurde folgende Schaumformulierung verwendet:
A: PUR Fließformulierung
B: PIR Dämmplatte
C: PIR Dämmplatte

**Tabelle 4: Zusammensetzungen der Formulierungen für Hartschaum-Anwendungen in Massenteilen**

| Formulierung | A | B | C |
|---|---|---|---|
| Polyol 1 | 50 | | |
| Polyol 2 | 50 | | |
| Polyol 3 | | | 15 |
| Polyol 4 | | 100 | |
| Polyol 5 | | | 85 |
| TCPP | - | 15 | 20 |
| PMDETA | | 0,2 | 0,3 |
| DMCHA | 2,0 | - | |
| KOSMOS 75 MEG | - | 4,0 | 3,0 |
| Wasser | 1,5 | 0,2 | 0,8 |
| HCFO 1233zd | 26 | - | 25 |
| Cyclo-Pentan | - | 8,0 | |
| Ameisensäure | | 3,0 | |
| Siloxan | 2,0 | 2,0 | 2,0 |
| | | | |
| Desmodur 44V20L | 190 | 200 | 240 |

### Folgende Polyole wurden verwendet:

Nr. 1: Daltolac^{®} R 471 von Huntsman
Nr. 2: Voranol^{®} 490 von Dow
Nr. 3: Polyethylenglykol PR 600 von Clariant
Nr. 4: Stepanpol^{®} PS 2352 von Stepan
Nr. 5: Terate^{®} 2541 von Invista

### Folgende Additive und Treibmittel wurden verwendet:

TCPP: Tris(1-chlor-2-propyl)phosphat
PMDETA: N,N,N',N",N"-Pentamethyldiethylentriamin
DMCHA: N,N-Dimethylcyclohexylamin
KOSMOS 75 MEG: Kaliumoctoat (75 Gew.-% in Ethylenglycol)
HCFO 1233zd: 1-Chloro-3,3,3-Trifluoropropen (E-Isomer)

Die Durchführung der Verschäumungen erfolgte im Handmischverfahren. Dazu wurden die in Tabelle 4 beschriebenen Formulierungen A und B mit verschiedenen erfindungsgemäßen Siloxanen nach dem erfindungsgemäßen Verfahren zu entsprechenden Schäumen verarbeitet.
Entsprechend der Einsatzkonzentration von 10 Gew.-% bei der Herstellung der Siloxane wurden diese als 10%ige Lösung im entsprechenden Isocyanat (siehe Tabelle 3) eingesetzt und die Einsatzmenge entsprechend angepasst, um die angegebenen Mengen an Siloxan in die Verschäumung einzubringen.

Zur Verschäumung wurden alle in Tabelle 4 aufgelisteten Komponenten, außer Siloxan und Isocyanat, in einen Becher eingewogen und für 30 Sekunden bei 1000 U/min gerührt.

Anschließend wurde das Isocyanat und das Siloxan zugegeben, die Reaktionsmischung mit einem Tellerrührer von 6 cm Durchmesser 5 Sekunden lang bei 3000 U/min verrührt und sofort in eine auf 50°C thermostatisierte Aluminiumform von 50 cm x 25 cm x 5 cm Größe überführt, welche mit Polyethylenfolie ausgekleidet war. Die Einsatzmenge an Schaumformulierung war dabei so bemessen, dass sie um 10 % über der zur Mindestbefüllung der Form notwendigen Menge lag.

Einen Tag nach der Verschäumung wurden die Schaumstoffe analysiert. An der Ober- und Unterseite wurden die Oberflächen und nach dem Aufschneiden der Schäume die Innenstörungen subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Referenzschäumen beurteilt.

Die Wärmeleitzahl wurde an 2,5 cm dicken Scheiben mit einem Gerät vom Typ Hesto Lambda Control bei Temperaturen an Probenunter- und -oberseite von 10°C und 36°C gemessen.

### Vergleichsbeispiele:

Zugabe der Intermediate aus Tabelle 2 zur Verschäumung bzw. zum Polyol-Gemisch mit Treibmittel.

Die Ergebnisse sind in Tabelle 5 zusammengestellt. Es sind die verwendeten Siloxane, die Schaum-Formulierungen, sowie die optische Beurteilung und die Porenstruktur und Wärmeleitfähigkeiten der Schäume zusammengefasst.

**Tabelle 5: Ergebnisse der Verschäumungen, Teil 1**

| Bsp. | Siloxan aus Bsp. 1 | Schaum-. Formul. | Bewertung oben/unten/in nen | Zellen /cm | Lamda-Wert / mW/m·K |
|---|---|---|---|---|---|
| 2.1 | 1 | A | 7/9/8 | 46-50 | 19,7 |
| 2.2 | 2 | B | 8/8/7 | 46-50 | 22,1 |
| 2.3 | 3 | B | 7/9/8 | 46-50 | 22,4 |
| 2.4 | 4 | B | 6/8/9 | 46-50 | 22,6 |
| 2.5 | 5 | B | 7/7/9 | 46-50 | 22,4 |
| 2.6 | 6 | B | 6/7/8 | 41-45 | 22,3 |
| 2.7 | 7 | B | 8/8/7 | 41-45 | 22,6 |
| 2.8 | 8 | B | 8/9/8 | 46-50 | 22,1 |
| 2.9 | 9 | C | 7/9/8 | 46-50 | 20,1 |
| 2.10 | 10 | C | 7/9/8 | 46-50 | 19,9 |
| 2.11 | 11 | C | 7/8/8 | 46-50 | 20,6 |
| 2.12 | 12 | A | 8/8/8 | 41-45 | 20,1 |
| 2.13 | 23 | A | 7/9/8 | 46-50 | 19,8 |
| Vgl.1 | I 10 | A | 6/7/6 | 41-45 | 21,5 |
| Vgl.2 | I 18 | A | 6/6/6 | 41-45 | 21,3 |

Des weiteren wurden Verschäumungen vorgenommen bei denen die Schaumformulierungen über einen Zeitraum von 6 Wochen bei 25°C gelagert wurden, um die in der Praxis üblichen Zeiten zu simulieren, die zwischen der Herstellung der Reaktionsmischungen und deren Verwendung verstreichen können.

Hierbei wurden, wie nach dem Stand der Technik üblich, die in Tabelle 2 beschriebenen Siloxan-Intermediate in der Polyol-haltigen Mischung zusammen mit Katalysatoren und Treibmitteln gelagert. Die erfindungsgemäßen Siloxane wurden im Isocyanat gelagert, das anschließend zur Verschäumung verwendet wurde.

Nach der Lagerzeit wurden die Polyol-Mischungen und die Isocyanat-Mischungen wiederum wie oben beschrieben mit einem Tellerrührer von 6 cm Durchmesser 5 Sekunden lang bei 3000 U/min verrührt und in eine auf 50°C thermostatisierte Aluminiumform von 50 cm x 25 cm x 5 cm Größe überführt.

Die Ergebnisse sind in Tabelle 6 zusammengefasst.

**Tabelle 6: Ergebnisse der Verschäumungen, Teil 2**

| Bsp. | Siloxan aus Bsp. 1 | Schaum-. Formul. | Bewertung oben/unten/in nen | Zellen /cm | Lamda-Wert / mW/m·K |
|---|---|---|---|---|---|
| 2.14 | 1 | A | 7/9/8 | 46-50 | 20,9 |
| 2.15 | 2 | B | 8/8/7 | 46-50 | 22,2 |
| 2.16 | 3 | B | 7/9/8 | 46-50 | 22,1 |
| 2.17 | 4 | B | 6/8/9 | 46-50 | 22,6 |
| 2.18 | 5 | B | 7/7/9 | 46-50 | 21,9 |
| 2.19 | 6 | B | 6/7/8 | 41-45 | 21,9 |
| 2.20 | 7 | B | 8/8/7 | 41-45 | 22,1 |
| 2.21 | 8 | B | 8/9/8 | 46-50 | 21,8 |
| 2.22 | 9 | C | 7/9/8 | 46-50 | 20,5 |
| 2.23 | 10 | C | 7/9/8 | 46-50 | 20,3 |
| 2.24 | 11 | C | 8/8/8 | 46-50 | 20,6 |
| 2.25 | 12 | A | 8/7/8 | 41-45 | 20,2 |
| 2.26 | 13 | A | 7/9/8 | 46-50 | 20,0 |
| 2.27 | 14 | B | 8/7/7 | 46-50 | 22,1 |
| 2.28 | 15 | C | 7/7/7 | 46-50 | 20,1 |
| 2.29 | 16 | B | 8/7/8 | 46-50 | 22,3 |
| 2.30 | 17 | C | 8/9/8 | 46-50 | 19,8 |
| 2.31 | 18 | B | 7/9/8 | 46-50 | 22,1 |
| 2.32 | 19 | A | 8/8/7 | 41-45 | 19,9 |
| 2.33 | 20 | A | 8/9/8 | 46-50 | 20,1 |
| 2.34 | 21 | A | 7/8/7 | 46-50 | 20,3 |
| 2.35 | 22 | C | 8/8/8 | 46-50 | 20,7 |
| 2.36 | 23 | A | 8/9/8 | 46-50 | 19,8 |
| 2.37 | 24 | B | 7/8/8 | 41-46 | 22,3 |
| 2.38 | 25 | B | 8/8/8 | 46-50 | 22,0 |
| Vgl.3 | I 10 | A | 2/2/1 | 1-5 | 32,4 |
| Vgl.4 | I 18 | A | 1/1/1 | 1-5 | 33,3 |
| Vgl.5 | I 9 | C | 2/1/1 | 1-5 | 34,5 |
| Vgl.6 | I 14 | C | 1/2/1 | 1-5 | 33,4 |
| Vgl.7 | I 15 | B | 2/2/2 | 1-5 | 32,7 |
| Vgl.8 | I 18 | B | 2/2/2 | 1-5 | 33,9 |

Es ist zu erkennen, dass die erfindungsgemäßen Siloxane gegenüber dem Stand der Technik deutliche Verbesserungen erzielen. Es werden gute Schaumeigenschaften erzielt, während bei den Vergleichsversuchen massive Kollapserscheinungen und Vergröberungen der Schäume festgestellt wurden, was in entsprechend verschlechterten Lambda-Werten resultiert.

## Patentansprüche

1. Zusammensetzung enthaltend ein Siloxan der Formel (I) 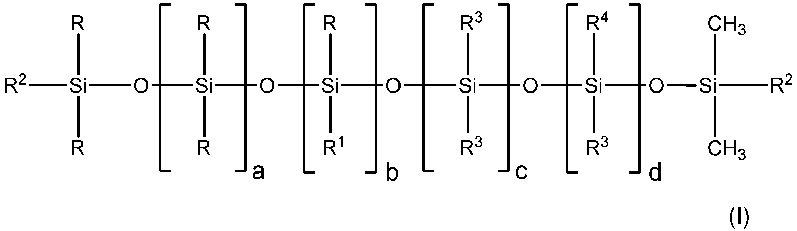 worin 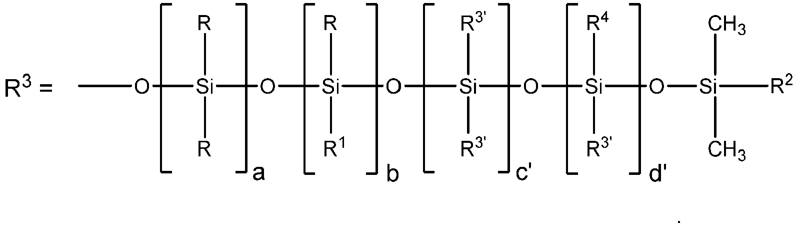
a unabhängig voneinander 0 bis 500 ist, vorzugsweise 1 bis 300 und insbesondere 2 bis 150,
b unabhängig voneinander 0 bis 60 ist, vorzugsweise 1 bis 50 und insbesondere 1 bis 30,
c unabhängig voneinander 0 bis 10, vorzugsweise 0 oder > 0 bis 5, ist,
d unabhängig voneinander 0 bis 10, vorzugsweise 0 oder > 0 bis 5, ist,
c' unabhängig voneinander 0 bis 10, vorzugsweise 0 oder > 0 bis 5, ist,
d' unabhängig voneinander 0 bis 10, vorzugsweise 0 oder > 0 bis 5, ist,
mit der Maßgabe, dass pro Molekül der Formel (I) die mittlere Anzahl ∑d + d' mit R^{3'} = R³ der T-Einheiten und die mittlere Anzahl ∑c + c' mit R^{3'} = R³ der Q-Einheiten pro Molekül jeweils nicht größer als 50, die mittlere Anzahl ∑a der D-Einheiten pro Molekül nicht größer als 2000 und die mittlere Anzahl ∑b der R¹ tragenden Siloxy-Einheiten pro Molekül nicht größer als 100 ist,
R unabhängig voneinander mindestens ein Rest aus der Gruppe linearer, cyclischer oder verzweigter, aliphatischer oder aromatischer, gesättigter oder ungesättigter
Kohlenwasserstoffreste mit 1 bis zu 20 C-Atomen ist, vorzugsweise ein Methylrest ist,
R^{3'} unabhängig voneinander R³ oder R ist,
R² unabhängig voneinander R¹ oder R ist,
R¹ ist ungleich R und unabhängig voneinander ein organischer Rest und/oder ein Rest ausgewählt aus der Gruppe umfassend
-CH₂-CH₂-CH₂-O-(CH₂-CH₂O-)ₓ-(CH₂-CH(R')O-)_{y}-R"
-CH₂-CH₂-O-(CH₂-CH₂O-)ₓ-(CH₂-CH(R')O-)_{y}-R"
-CH₂-R^{IV}
-CH₂-CH₂-(O)_{x'}-R^{IV}
-CH₂-CH₂-CH₂-O-CH₂-CH(OR")-CH₂OR" 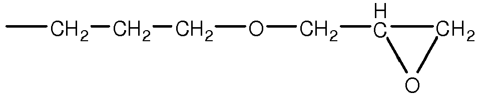 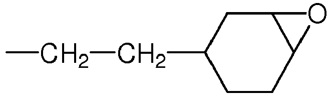
oder
-CH₂-CH₂-CH₂-O-CH₂-C(CH₂OR")₂-CH₂-CH₃
ist, bevorzugt ist R¹
-CH₂-CH₂-CH₂-O-(CH₂-CH₂O-)ₓ-(CH₂-CH(R')O-)_{y}-R"
und/oder
-CH₂-CH₂-O-(CH₂-CH₂O-)ₓ-(CH₂-CH(R')O-)_{y}-R"
und /oder
-CH₂₋R^{IV},
worin
x 0 bis 100, vorzugsweise > 0, insbesondere 1 bis 50,
x' 0 oder 1,
y 0 bis 100, vorzugsweise > 0, insbesondere 1 bis 50, bevorzugt x 0 bis 100, vorzugsweise 1 bis 80, bevorzugt 2 bis 50 und y 0 bis 100, vorzugsweise 0 oder 1 bis 80, bevorzugt 0 oder 2 bis 50,
R' unabhängig von einander eine gegebenenfalls
substituierte, beispielsweise mit Alkylresten, Arylresten oder Halogenalkyl- oder Halogenarylresten substituierte, Alkyl- oder Arylgruppe mit 1 bis 12 C-Atomen ist, wobei innerhalb eines Restes R¹ und/oder eines Moleküls der Formel I untereinander verschiedene Substituenten R' vorliegen können, vorzugsweise sind R' Methyl-, Ethyl- und/oder Phenyl-Reste, bevorzugt Methyl-Reste, und
R" unabhängig voneinander eine Alkylgruppe mit 1 bis 4 C-Atomen, vorzugsweise eine Methylgruppe, eine Gruppe -C(O)-R"' mit R'" = Alkylrest, eine Gruppe -CH₂-O-R', eine Alkylarylgruppe, wie z.B. eine Benzylgruppe, die Gruppe -C(O)NH-R' oder ein Rest der Formel (II) 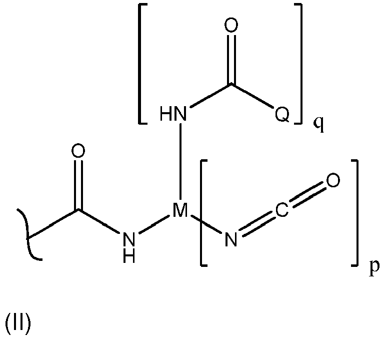 bedeutet,
mit M = organischer Rest, vorzugsweise organischer Rest der ausschließlich Wasserstoff und Kohlenstoff und ggf. Halogenatome aufweist, mit mindestens 5, vorzugsweise von 5 bis 50, bevorzugt von 6 bis 35 Kohlenstoffatomen,
p = 0 oder 1 bis 15, vorzugsweise 1 bis 5, bevorzugt 1, 2, 3, 4 oder 5,
q = 0 oder 1 bis 15, vorzugsweise 0 oder 1 bis 5, bevorzugt 0,
Summe p + q größer-gleich 1, vorzugsweise 1 bis 30, bevorzugt 1 bis 10 und besonders bevorzugt 1, 2, 3, 4 oder 5,
Q = organischer Rest oder gleicher oder verschiedener Rest der Formel (I), der wiederum über den Rest R¹ angebunden ist,
vorzugsweise organischer Rest, der kein Siliziumatom aufweist oder identischer Rest der Formel (I), Q ist also zwei- oder mehrmals mit demselben Siloxan der Formel (I) verknüpft, und
besonders bevorzugt organischer Rest, der kein Siliziumatom aufweist, mit der Maßgabe, dass in einer Verbindung der Formel (I), unabhängig von der Anzahl möglicher Reste der Formel (I) die Anzahl der Siliziumatome in der Verbindung vorzugsweise maximal 1500, bevorzugt 500 und besonders bevorzugt maximal 300 beträgt,
R^{IV} ein linearer, cyclischer oder verzweigter, ggf. substituierter, z. B. mit Halogenen substituierter Kohlenwasserstoffrest mit 1 bis 50, vorzugsweise 9 bis 45, bevorzugt 13 bis 37 C-Atomen ist,
R⁴ unabhängig voneinander R, R¹ und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann,
mit der Maßgabe, dass mindestens ein Rest der Formel (II) in einer Verbindung der Formel (I) vorhanden ist,
und ein oder mehrere Verbindungen, die zwei oder mehr Isocyanatgruppen aufweisen (VICG), zeichnet sich dadurch aus, dass die Zusammensetzung keine Polyole, die kein Siliziumatom enthalten, oder deren Umsetzungsprodukte mit Isocyanaten aufweisen.

2. Zusammensetzung nach Anspruch 1, **dadurch gekennzeichnet, dass** als Siloxan der Formel (I) ein Siloxan vorhanden ist, bei dem q = 0 ist.

3. Zusammensetzung nach Anspruch 1 oder 2, **dadurch gekennzeichnet, dass** als Siloxan der Formel (I) ein Siloxan vorhanden ist, bei dem c und d = 0 sind.

4. Zusammensetzung nach zumindest einem der Ansprüche 1 bis 3, **dadurch gekennzeichnet, dass** als Siloxan der Formel (I) ein Siloxan vorhanden ist, bei dem die Reste, die Reste der Formel (II) tragen, ausschließlich kammständig angeordnet sind.

5. Zusammensetzung nach zumindest einem der Ansprüche 1 bis 4, **dadurch gekennzeichnet, dass** als Siloxan der Formel (I) ein Siloxan vorhanden ist oder ausschließlich vorhanden sind, bei denen der Quotient a/b mindestens 7 ist.

6. Zusammensetzung nach zumindest einem der Ansprüche 1 bis 5, **dadurch gekennzeichnet, dass** als Siloxan der Formel (I) ein Siloxan vorhanden ist, bei dem in R¹ vorhandene Oxyalkylen-Einheiten ausschließlich Oxyethylen-Einheiten sind.

7. Zusammensetzung nach zumindest einem der Ansprüche 1 bis 6, **dadurch gekennzeichnet, dass** als Siloxan der Formel (I) ein Siloxan vorhanden ist, bei dem R¹ unabhängig voneinander ein organischer Rest ausgewählt aus der Gruppe umfassend
-CH₂-CH₂-CH₂-O-(CH₂-CH₂O-)ₓ-(CH₂-CH(R')O-)_{y}-R"
und/oder
-CH₂-CH₂-O-(CH₂-CH₂O-)ₓ-(CH₂-CH(R')O-)_{y}-R"
und /oder
-CH₂-R^{IV}
ist, worin
x 0 bis 100,
y 0 bis 100,
R' Methyl ist und
R" unabhängig voneinander eine Gruppe der Formel (II) oder eine Alkylgruppe mit 1 bis 4 C-Atomen, eine Gruppe -C(O)-R"' mit R'" = Alkylrest, eine Gruppe -CH₂-O-R', eine Alkylarylgruppe, die Gruppe -C(O)NH-R' bedeutet, wobei mindestens 10 mol-% der Reste R" solche der Formel (II) sind.

8. Verfahren zur Herstellung von Polyurethanschaum, **dadurch gekennzeichnet, dass** eine Zusammensetzung gemäß einem der Ansprüche 1 bis 7 eingesetzt wird.

9. Verfahren nach Anspruch 8, **dadurch gekennzeichnet, dass** als Treibmittel Ameisensäure und/oder Halogenhaltige Treibmittel eingesetzt werden.

10. Verfahren nach Anspruch 8 oder 9, **dadurch gekennzeichnet, dass** soviel der Zusammensetzung eingesetzt wird, dass der Massenanteil an Verbindungen der Formel (I) am fertigen Polyurethanschaum von 0,01 bis 10 Gew.-%, bevorzugt von 0,1 bis 3 Gew.-% beträgt.

11. Polyurethanschaum erhalten durch ein Verfahren gemäß einem der Ansprüche 8 bis 10.

12. Polyurethanschaum gemäß Anspruch 11, **dadurch gekennzeichnet, dass** er geschlossenzellig ist.

13. Polyurethanschaum gemäß Anspruch 11 oder 12, **dadurch gekennzeichnet, dass** er ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum ist.

14. Verwendung der Polyurethanschäume gemäß zumindest einem der Ansprüche 11 bis 13 in und/oder als Kühlschrankisolierung, Dämmplatten, Sandwichelementen, Rohrisolationen, Sprühschaum, 1- und/oder 1.5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber oder zur Herstellung entsprechender Produkte.

## Claims

1. Composition comprising a siloxane of the formula (I) 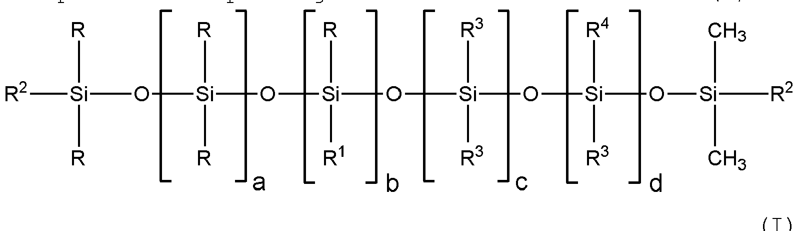 in which 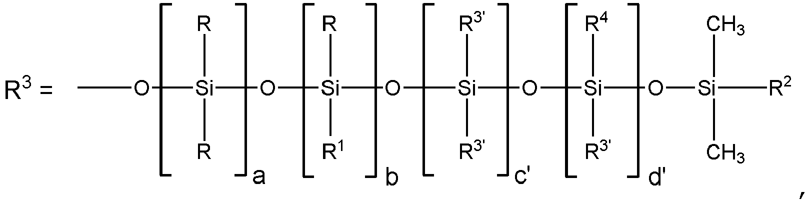
a independently at each occurrence is 0 to 500, preferably 1 to 300 and more particularly 2 to 150,
b independently at each occurrence is 0 to 60, preferably 1 to 50 and more particularly 1 to 30,
c independently at each occurrence is 0 to 10, preferably 0 or > 0 to 5,
d independently at each occurrence is 0 to 10, preferably 0 or > 0 to 5,
c' independently at each occurrence is 0 to 10, preferably 0 or > 0 to 5,
d' independently at each occurrence is 0 to 10, preferably 0 or > 0 to 5,
with the proviso that per molecule of the formula (I) the average number ∑d + d' with R^{3'} = R³ of the T units and the average number ∑c + c' with R^{3'} = R³ of the Q units per molecule is in each case not greater than 50, the average number ∑a of the D units per molecule is not greater than 2000 and the average number ∑b of the R¹ carrying siloxy units per molecule is not greater than 100,
R independently at each occurrence is at least one radical from the group of linear, cyclic or branched, aliphatic or aromatic, saturated or unsaturated hydrocarbon radicals having 1 up to 20 C atoms, preferably a methyl radical,
R^{3'} independently at each occurrence is R³ or R,
R² independently at each occurrence is R¹ or R,
R¹ is different from R and independently at each occurrence is an organic radical and/or a radical selected from the group encompassing
-CH₂-CH₂-CH₂-O- (CH₂-CH₂O-)ₓ-(CH₂-CH(R')O-)_{y}-R"
-CH₂-CH₂-O- (CH₂-CH₂O-)ₓ-(CH₂-CH(R')O-)_{y}-R''
-CH₂-R^{IV}
-CH₂-CH₂-(O)_{x"}-R^{IV}
-CH₂-CH₂-CH₂-O-CH₂-CH(OR") -CH₂OR" 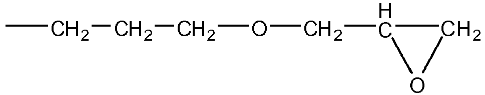 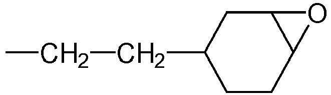
or
-CH₂-CH₂-CH₂-O-CH₂-C(CH₂OR")₂-CH₂-CH₃, R¹
preferably being
-CH₂-CH₂-CH₂-O-(CH₂-CH₂O-)ₓ-(CH₂-CH(R')O-)_{y}-R''
and/or
-CH₂-CH₂-O-(CH₂-CH₂O-)ₓ-(CH₂-CH(R')O-)_{y}-R''
and/or
-CH₂-R^{IV},
in which
x is 0 to 100, preferably > 0, more particularly 1 to 50,
x' is 0 or 1,
y is 0 to 100, preferably > 0, more particularly 1 to 50,
x preferably being 0 to 100, more preferably 1 to 80, preferably 2 to 50 and y being 0 to 100, more preferably 0 or 1 to 80, preferably 0 or 2 to 50,
R' independently at each occurrence is an optionally substituted alkyl or aryl group having 1 to 12 C atoms, substituted for example by alkyl radicals, aryl radicals or haloalkyl or haloaryl radicals, it being possible for substituents R' different among one another to be present within a radical R¹ and/or within a molecule of the formula I, R' preferably being methyl, ethyl and/or phenyl radicals, more preferably methyl radicals, and
R" independently at each occurrence is an alkyl group having 1 to 4 C atoms, preferably a methyl group, a group -C(O)-R''' with R''' = alkyl radical, a group - CH₂-O-R', an alkylaryl group, such as a benzyl group, for example, the group -C(O)NH-R' or a radical of the formula (II) 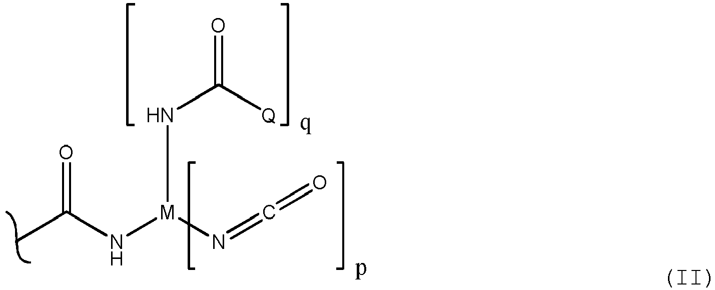
with M = organic radical, preferably organic radical containing exclusively hydrogen and carbon and optionally halogen atoms, having at least 5, preferably from 5 to 50, more preferably from 6 to 35 carbon atoms,
p = 0 or 1 to 15, preferably 1 to 5, more preferably 1, 2, 3, 4 or 5,
q = 0 or 1 to 15, preferably 0 or 1 to 5, more preferably 0,
sum total p + q is greater than or equal to 1, preferably 1 to 30, more preferably 1 to 10 and very preferably 1, 2, 3, 4 or 5,
Q = organic radical or identical or different radical of the formula (I) attached in turn via the radical R¹, preferably organic radical containing no silicon atom or identical radical of the formula (I), and so Q is linked two or more times to the same siloxane of the formula (I), and more preferably organic radical containing no silicon atom, with the proviso that in a compound of the formula (I), irrespective of the number of possible radicals of the formula (I), the number of silicon atoms in the compound is preferably not more than 1500, more preferably 500 and very preferably not more than 300,
R^{IV} is a linear, cyclic or branched, optionally substituted hydrocarbon radical, substituted for example by halogens, having 1 to 50, preferably 9 to 45, more preferably 13 to 37 C atoms,
R⁴ independently at each occurrence may be R, R¹ and/or a heteroatom-substituted, functionalized, organic, saturated or unsaturated radical selected from the group of alkyl, aryl, chloroalkyl, chloroaryl, fluoroalkyl, cyanoalkyl, acryloyloxyaryl-, acryloyloxyalkyl, methacryloyloxyalkyl, methacryloyloxypropyl or vinyl radical,
with the proviso that there is at least one radical of the formula (II) in a compound of the formula (I),
and one or more compounds having two or more isocyanate groups (VICG), is distinguished in that the composition comprises no polyols which contain no silicon atom, or reaction products thereof with isocyanates.

2. Composition according to Claim 1, **characterized in that** said siloxane of the formula (I) comprises a siloxane in which q = 0.

3. Composition according to Claim 1 or 2, **characterized in that** said siloxane of the formula (I) comprises a siloxane in which c and d = 0.

4. Composition according to at least one of Claims 1 to 3, **characterized in that** said siloxane of the formula (I) comprises a siloxane in which the radicals which carry radicals of the formula (II) are arranged exclusively in comb positions.

5. Composition according to at least one of Claims 1 to 4, **characterized in that** said siloxane of the formula (I) comprises a siloxane, or consists exclusively of, in which the ratio a/b is at least 7.

6. Composition according to at least one of Claims 1 to 5, **characterized in that** said siloxane of the formula (I) comprises a siloxane in which oxyalkylene units present in R¹ are exclusively oxyethylene units.

7. Composition according to at least one of Claims 1 to 6, **characterized in that** said siloxane of the formula (I) comprises a siloxane in which R¹ independently at each occurrence is an organic radical selected from the group encompassing
-CH₂-CH₂-CH₂-O-(CH₂-CH₂O-)ₓ-(CH₂-CH(R')O-)_{y}-R''
and/or
-CH₂-CH₂-O-(CH₂-CH₂O-)ₓ-(CH₂-CH(R')O-)_{y}-R''
and/or
-CH₂-R^{IV},
in which
x is 0 to 100,
y is 0 to 100,
R' is methyl and
R'' independently at each occurrence is a group of the formula (II) or an alkyl group having 1 to 4 C atoms, a group -C(O)-R''' with R''' = alkyl radical, a group -CH₂-O-R', an alkylaryl group, or the group - C(O)NH-R', with at least 10 mol% of the radicals R" being of the formula (II).

8. Process for producing polyurethane foam, **characterized in that** a composition according to any of Claims 1 to 7 is used.

9. Process according to Claim 8, **characterized in that** formic acid blowing agent and/or halogen-containing blowing agents are used.

10. Process according to Claim 8 or 9, **characterized in that** the amount of the composition used is such that the mass fraction of compounds of the formula (I) in the completed polyurethane foam is from 0.01 to 10 wt%, preferably from 0.1 to 3 wt%.

11. Polyurethane foam obtained by a process according to any of Claims 8 to 10.

12. Polyurethane foam according to Claim 11, **characterized in that** it is closed-cellular.

13. Polyurethane foam according to Claim 11 or 12, **characterized in that** it is a rigid polyurethane foam, a flexible polyurethane foam, a viscoelastic foam, an HR foam, a semi-rigid polyurethane foam, a thermoformable polyurethane foam or an integral foam.

14. Use of the polyurethane foams according to at least one of Claims 11 to 13, in and/or as refrigerator insulation, insulation panels, sandwich elements, pipe insulations, spray foam, 1 and/or 1.5 component can foam, imitation wood, modelling foam, packaging foam, mattress, furniture cushioning, automotive seat cushioning, headrest, dashboard, automotive interior trim, automotive roof liner, sound absorption material, steering wheel, footwear sole, carpet backing foam, filter foam, sealing foam and adhesive or for producing corresponding products.

## Revendications

1. Composition contenant un siloxane de formule (I) 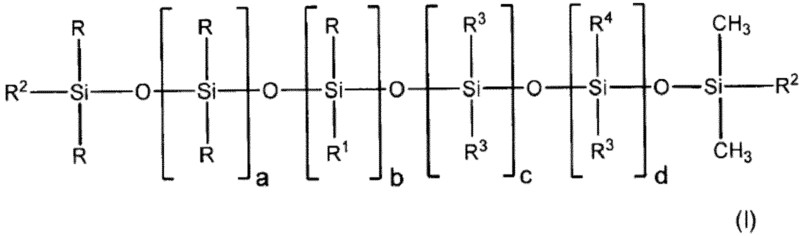 dans laquelle 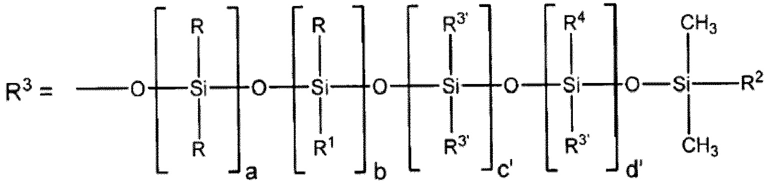
les a représentent indépendamment les uns des autres 0 à 500, de préférence 1 à 300 et notamment 2 à 150,
les b représentent indépendamment les uns des autres 0 à 60, de préférence 1 à 50 et notamment 1 à 30,
les c représentent indépendamment les uns des autres 0 à 10, de préférence 0 ou > 0 à 5,
les d représentent indépendamment les uns des autres 0 à 10, de préférence 0 ou > 0 à 5,
les c' représentent indépendamment les uns des autres 0 à 10, de préférence 0 ou > 0 à 5,
les d' représentent indépendamment les uns des autres 0 à 10, de préférence 0 ou > 0 à 5,
à condition que, par molécule de formule (I), le nombre moyen Σd+d' avec R^{3'} = R³ des unités T et le nombre moyen Σc+c' avec R^{3'} = R³ des unités Q par molécule ne soient chacun pas supérieurs à 50, le nombre moyen Σa des unités D par molécule ne soit pas supérieur à 2 000 et le nombre moyen Σb des unités siloxy portant R¹ par molécule ne soit pas supérieur à 100,
les R représentent indépendamment les uns des autres un radical du groupe des radicaux hydrocarbonés linéaires, cycliques ou ramifiés, aliphatiques ou aromatiques, saturés ou insaturés, de 1 à 20 atomes C, de préférence un radical méthyle,
les R^{3'} représentent indépendamment les uns des autres R³ ou R,
les R² représentent indépendamment les uns des autres R¹ ou R,
les R¹ sont différents de R et représentent indépendamment les uns des autres un radical organique et/ou un radical choisi dans le groupe comprenant
-CH₂-CH₂-CH₂-O-(CH₂-CH₂O-)ₓ- (CH₂-CH(R')O-)_{y}-R''
-CH₂-CH₂-O-(CH₂-CH₂O-)ₓ- (CH₂-CH(R')O-)_{y}-R''
-CH₂-R^{IV}
-CH₂-CH₂-(O)_{x'}-R^{IV}
-CH₂-CH₂-CH₂-O-CH₂-CH (OR'')-CH₂OR'' 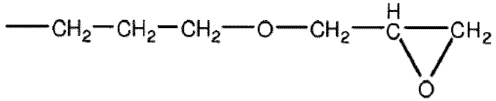 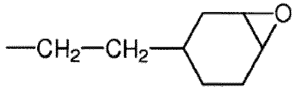
ou
-CH₂-CH₂-CH₂-O-CH₂-C(CH₂R")₂-CH₂-CH₃, les R¹ représentant de préférence -CH₂-CH₂-CH₂-O-(CH₂-CH₂-O-)ₓ-(CH₂-CH(R')O-)_{y}-R'' et/ou -CH₂-CH₂-O-(CH₂-CH₂O-)ₓ-(CH₂-CH(R')O-)_{y}-R" et/ou -CH₂-R^{IV},
x représentant 0 à 100, de préférence > 0, notamment 1 à 50,
x' représentant 0 ou 1,
y représentant 0 à 100, de préférence > 0, notamment 1 à 50,
de préférence x représentant 0 à 100, de préférence 1 à 80, de préférence 2 à 50,
et y représentant 0 à 100, de préférence 0 ou 1 à 80, de préférence 0 ou 2 à 50,
les R' représentant indépendamment les uns des autres un groupe alkyle ou aryle de 1 à 12 atomes C, éventuellement substitué, par exemple substitué avec des radicaux alkyle, des radicaux aryle ou des radicaux halogénoalkyle ou halogénoaryle, des substituants R' différents entre eux pouvant être présents dans un radical R¹ et/ou une molécule de formule I, les R' représentant de préférence des radicaux méthyle, éthyle et/ou phényle, de préférence des radicaux méthyle, et les R'' signifiant indépendamment les uns des autres un groupe alkyle de 1 à 4 atomes C, de préférence un groupe méthyle, un groupe -C(O)-R"' avec R''' = radical alkyle, un groupe -CH₂-O-R', un groupe alkylaryle, tel que p. ex. un groupe benzyle, le groupe -C(O)NH-R' ou un radical de formule (II) 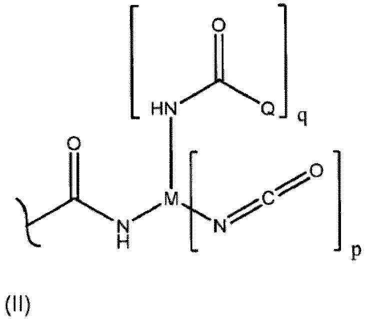
avec M = radical organique, de préférence radical organique qui comprend exclusivement de l'hydrogène et du carbone et éventuellement des atomes d'halogène, contenant au moins 5, de préférence de 5 à 50, de préférence de 6 à 35 atomes de carbone,
p = 0 ou 1 à 15, de préférence 1 à 5, de préférence 1, 2, 3, 4 ou 5,
q = 0 ou 1 à 15, de préférence 0 ou 1 à 5, de préférence 0,
la somme p + q étant supérieure ou égale à 1, de préférence de 1 à 30, de préférence de 1 à 10 et de manière particulièrement préférée 1, 2, 3, 4 ou 5,
Q = radical organique ou un radical identique ou différent de formule (I), qui est lui-même relié par le radical R¹, de préférence un radical organique qui ne comprend pas d'atome de silicium, ou un radical identique de formule (I), Q étant également relié deux fois ou plus avec le même siloxane de formule (I), et de manière particulièrement préférée un radical organique qui ne comprend pas d'atome de silicium, à condition que, dans un composé de formule (I), indépendamment du nombre de radicaux de formule (I) possibles, le nombre d'atomes de silicium dans le composé soit de préférence d'au plus 1 500, de préférence de 500 et de manière particulièrement préférée d'au plus 300,
R^{IV} représentant un radical hydrocarboné linéaire, cyclique ou ramifié, éventuellement substitué, p. ex. substitué avec des halogènes, de 1 à 50, de préférence 9 à 45, de préférence 13 à 37 atomes C,
les R⁴ représentent indépendamment les uns des autres R, R¹ et/ou un radical organique saturé ou insaturé, fonctionnalisé, substitué avec des hétéroatomes, choisi dans le groupe constitué par un radical alkyle, aryle, chloroalkyle, chloroaryle, fluoroalkyle, cyanoalkyle, acryloxyaryle, acryloxyalkyle, méthacryloxyalkyle, méthacryloxypropyle ou vinyle,
à condition qu'au moins un radical de formule (II) soit présent dans un composé de formule (I),
et un ou plusieurs composés qui comprennent deux groupes isocyanate ou plus (VICG), se distingue en ce que la composition ne comprend pas de polyols qui ne contiennent pas d'atome de silicium ou leurs produits de réaction avec des isocyanates.

2. Composition selon la revendication 1, **caractérisée en ce qu'**un siloxane dans lequel q = 0 est présent en tant que siloxane de formule (I).

3. Composition selon la revendication 1 ou 2, **caractérisée en ce qu'**un siloxane dans lequel c et d = 0 est présent en tant que siloxane de formule (I).

4. Composition selon au moins l'une quelconque des revendications 1 à 3, **caractérisée en ce qu'**un siloxane dans lequel les radicaux qui portent des radicaux de formule (II) sont agencés exclusivement en peigne est présent en tant que siloxane de formule (I).

5. Composition selon au moins l'une quelconque des revendications 1 à 4, **caractérisée en ce qu'**un siloxane dans lequel le quotient a/b vaut au moins 7 est présent ou sont exclusivement présent en tant que siloxane de formule (I).

6. Composition selon au moins l'une quelconque des revendications 1 à 5, **caractérisée en ce qu'**un siloxane dans lequel les unités oxyalkylène présentes dans R¹ sont exclusivement des unités oxyéthylène est présent en tant que siloxane de formule (I).

7. Composition selon au moins l'une quelconque des revendications 1 à 6, **caractérisée en ce qu'**un siloxane dans lequel les R¹ représentent indépendamment les uns des autres un radical organique choisi dans le groupe comprenant
-CH₂-CH₂-CH₂-O-(CH₂-CH₂O-)ₓ-(CH₂-CH(R')O-)_{y}-R''
et/ou
-CH₂-CH₂-O-(CH₂-CH₂O-)ₓ-(CH₂-CH(R')O-)_{y}-R''
et/ou
-CH₂-R^{IV},
x représentant 0 à 100,
y représentant 0 à 100,
R' représentant méthyle et
les R" signifiant indépendamment les uns des autres un groupe de formule (II) ou un groupe alkyle de 1 à 4 atomes C, un groupe -C(O)-R'" avec R'" = radial alkyle, un groupe -CH₂-O-R', un groupe alkylaryle, le groupe - C(O)NH-R', au moins 10 % en moles des radicaux R" étant de formule (II),
est présent en tant que siloxane de formule (I).

8. Procédé de fabrication d'une mousse de polyuréthane, **caractérisé en ce qu'**une composition selon l'une quelconque des revendications 1 à 7 est utilisée.

9. Procédé selon la revendication 8, **caractérisé en ce que** de l'acide formique et/ou des agents gonflants contenant des halogènes sont utilisés en tant qu'agent gonflant.

10. Procédé selon la revendication 8 ou 9, **caractérisé en ce que** suffisamment de la composition est utilisée pour que la proportion en masse de composés de formule (I) dans la mousse de polyuréthane finie soit de 0,01 à 10 % en poids, de préférence de 0,1 à 3 % en poids.

11. Mousse de polyuréthane obtenue par un procédé selon l'une quelconque des revendications 8 à 10.

12. Mousse de polyuréthane selon la revendication 11, **caractérisée en ce qu'**elle est à cellules fermées.

13. Mousse de polyuréthane selon la revendication 11 ou 12, **caractérisée en ce qu'**il s'agit d'une mousse dure de polyuréthane, d'une mousse souple de polyuréthane, d'une mousse viscoélastique, d'une mousse HR, d'une mousse de polyuréthane semi dure, d'une mousse de polyuréthane thermoformable ou d'une mousse intégrale.

14. Utilisation des mousses de polyuréthane selon au moins l'une quelconque des revendications 11 à 13 dans et/ou en tant qu'isolation de réfrigérateur, panneaux isolants, éléments en sandwich, isolations de tuyaux, mousse pulvérisée, mousse en boîte à 1 et/ou 1,5 composant, imitation de bois, mousse de modèle, mousse d'emballage, matelas, rembourrage de meubles, rembourrage de sièges automobiles, appuie-tête, tableau de bord, garnissage intérieur d'automobile, toit d'automobile, matériau d'absorption acoustique, volant, semelle de chaussure, mousse pour le dos de tapis, mousse de filtre, mousse d'étanchéité et colle ou pour la fabrication de produits correspondants.
